## Europäisches Patentamt
(19) ### European Patent Office
### Office européen des brevets

(11) Publication number : **0 448 905 B1**

# EUROPEAN PATENT SPECIFICATION

(12)

(45) Date of publication of patent specification :
**10.08.94 Bulletin 94/32**

(51) Int. Cl.⁵ : **B60C 1/00**, B60C 5/14, B60C 5/16

(21) Application number : **90630242.7**

(22) Date of filing : **18.12.90**

(54) **Pneumatic tire having air retention toeguard.**

(30) Priority : **28.03.90 US 500625**

(43) Date of publication of application :
**02.10.91 Bulletin 91/40**

(45) Publication of the grant of the patent :
**10.08.94 Bulletin 94/32**

(84) Designated Contracting States :
**DE FR GB IT**

(56) References cited :
**EP-A- 0 251 980**
**CH-A- 327 826**
**FR-A- 2 624 440**
**GB-A- 2 113 692**
**US-A- 4 396 051**

(73) Proprietor : **THE GOODYEAR TIRE & RUBBER COMPANY**
**1144 East Market Street**
**Akron, Ohio 44316-0001 (US)**

(72) Inventor : **Sandstrom, Paul Harry**
**96 Milton Drive**
**Tallmadge, Ohio 44278 (US)**
Inventor : **Francik, William Paul**
**491 Mackinaw Circle**
**Bath, Ohio 44313 (US)**

(74) Representative : **Leitz, Paul**
**Goodyear Technical Center-Luxembourg**
**L-7750 Colmar-Berg (LU)**

EP 0 448 905 B1

## Description

Field

This invention relates to a pneumatic tire having an air retention toeguard.

Background

The toeguard of a pneumatic rubber tire is primarily an outer portion of the tire adjacent to its bead portion that contacts the rim of the wheel in a tire/wheel assembly. The toeguard is well known to those having skill in the tire art.

FR-A-2 624 440 discloses an air and moisture impermeable rubber composition, located between the tread and the carcass ply of a tire so as to protect textile and metallic reinforcement elements. The composition includes an epoxydized polyisoprene with at least 20% mol. of oxirane.

The inner surface of pneumatic rubber tires is typically comprised of an elastomeric composition designed to prevent or retard the permeation of air and moisture into the carcass from the tire's inner air chamber. It is often referred to as an innerliner. Innerliners have also been used for many years in tubeless pneumatic vehicle tires to retard or prevent the escape of air used to inflate the tire, thereby maintaining tire pressure.

An innerliner typically extends across the crown area of the inner portion of the tire as well as its sidewalls but does not typically extend entirely to the bead area. The toeguard portion, or component, of the tire generally extends into this area and the innerliner does not usually extend across the toeguard. The toeguard component is typically located at the bead region of the tire as an outer layer of the tire which interfaces with a rigid rim on which the pneumatic tire is mounted. It thus, in a sense, might be considered as an extension of the tire innerliner.

Rubbers which are relatively impermeable to air are often used as a major portion of said innerliners and can include butyl rubber and halobutyl rubbers. U.S. Patent Nos. 3,808.177 and 4,725,649 are instructive.

The innerliner is normally prepared by conventional calendering or milling techniques to form a strip of uncured compounded rubber of an appropriate width, which is sometimes referred to as a gum strip. Typically, the gum strip is the first element of the tire to be applied to a tire building drum, over and around which the remainder of the tire is built. When the tire is cured, such innerliner becomes an integral, co-cured, part of the tire. Tire innerliners and methods of preparation are well known to those having skill in such art.

However, as hereinbefore pointed out, the protective innerliner designed to be an air barrier often does not extend to the bead area and particularly the toeguard area of the tire. This is sometimes because, during the building of the tire, the soft innerliner rubber compound can flow into a portion of the tire building machine near the bead portion of the tire being built making it difficult to remove the tire therefrom. An absence of such innerliner in the toeguard area can be a disadvantage because as the toeguard extends into or around the bead area, it typically then has substantially less air retention properties. A toeguard could, however, provide a valuable extension to the tire innerliner layer.

Disclosure and Practice of Invention

In accordance with this invention, a pneumatic rubber tire is provided with an integral toeguard component layer of a sulfur cured rubber composition positioned as an outer layer of the tire in its bead region comprised of, based on 100 parts by weight rubber, a blend of (A) 20 to 60 parts by weight of at least one of butyl rubber and halobutyl rubber; and (B) 80 to 40 parts by weight of rubber comprised of (1) 10 to 100, preferably 50 to 100, weight percent epoxidized cis 1,4-polyisoprene rubber and, correspondingly, up to 90, preferably up to 50, weight percent cis 1,4-polyisoprene rubber, where said epoxidized rubber has a glass transition temperature (Tg) in the range of -10°C to -60°C.

While the epoxidized cis 1,4-polyisoprene rubber or the cis 1,4-polyisoprene rubber (not epoxidized) may be either natural or synthetic rubber, preferably at least one is natural rubber.

The toeguard rubber composition of this invention was observed to have an enhanced resistance to air permeation. It thus provides a valuable extension of the tire innerliner to the bead region of the tire.

The Tg of the epoxidized cis 1,4-polyisoprene rubber, preferably natural rubber, is proportional to the level of epoxidation. Typically, the level of epoxidation is in the range of 5 to 50 mole percent usually at least 20 mole percent, preferably 20 to 30 mole percent. The epoxidation of the natural rubber may be accomplished, for example, by epoxidation of natural rubber latex using peroxides which generate oxygen for the reaction. The level of epoxidation is the percent of the double bonds of the rubber which have been epoxidized.

Preferably, the halobutyl rubber is at least one of chlorobutyl and bromobutyl rubber. Such rubbers are well known.

In practice, the toeguard composition is generally first prepared as an uncured compounded rubber gum strip, usually fabric reinforced, constructed as an outer layer (exposed outside surface of the tire and positioned to contact the rim of the wheel, although once mounted on a rim, a part or even most of the toeguard may not be visible) of an uncured rubber tire structure in the region of its bead portion, and then sulfur co-cured with the tire during the tire curing operation under conditions of heat and pressure. Thus, the toeguard layer becomes an integral part of the tire by being co-cured therewith as compared to being a simple adherent laminate. Thus, the toeguard component is sulfur co-cured with the rubber tire carcass. Such toeguard location and construction is well known to those having skill in such tire art.

It is to be understood that the prescribed toeguard rubbers can be compounded with conventional rubber compounding ingredients comprised of, for example, carbon black, clay, talc, mica, silica, zinc oxide, stearic acid, rubber processing oil, sulfur, accelerator and antidegradant and then typically extruded and/or calendered to form the uncured gum strip. Such rubber compounding materials and methods are well known to those having skill in such art.

The toeguard component is typically fabric reinforced with a textile woven fabric. Various fabrics can be used, such as, for example, those of polyester, rayon, nylon or aramid.

The uncured tire carcass rubber interface with which the toeguard, particularly the fabric reinforced toeguard component, is sulfur co-cured can be of various sulfur curable rubber and rubber blends such as, for example, synthetic diene rubbers such as polybutadiene, polyisoprene and styrene/butadiene copolymer rubbers.

Thus, the toeguard component becomes an integral outer layer of the tire in that sense that it is a layer on the outer portion of the tire carcass, although when the tire is mounted on a rim most, if not all, of the toeguard component will not be readily visible.

The toeguard component rubber composition (fabric reinforced) can be an extension of or become a part of the tire's basic innerliner. It is important to appreciate that the fabric reinforced toeguard component of this invention is positioned to be located between the tire bead component and a rigid rim in a tire/rim assembly.

Typically the uncured toeguard strip has an uncured thickness in the range of about 0.03 to about 0.08 inch (0.08-0.2 cm), depending somewhat on the tire size and its intended use.

The pneumatic tire with the integral toeguard composition may be constructed in the form of a passenger tire, truck tire, or other type of bias or radial pneumatic tire.

The following examples are presented to demonstrate the invention. The parts and percentages are by weight unless otherwise noted.

EXAMPLE I

Samples of blends of halobutyl rubber with other rubbers (Experiments A-C), namely, natural rubber, and/or epoxidized natural rubber were prepared and tested as shown in Tables 1 and 2.

Experiments B-C show the results of blends of epoxidized natural rubber combinations with halobutyl rubbers such as 50/50 and 65/35 epoxidized natural rubber/halobutyl ratios. The halobutyl rubber used was bromobutyl rubber.

They illustrate improvements over a control (Exp A) and the blend of Experiment B showed an advantage over all the others for air impermeability.

The materials were mixed as a two-step mixing process in a rubber blender in which all of the ingredients were mixed in the first step except for sulfur, accelerators and zinc oxide which were added and mixed in the second step.

The physical tests were conducted on the cured samples (the samples were prepared by curing the rubber for about 18 minutes at 150°C) using conventional methods.

The following Table 1 demonstrates the recipes of which the samples were comprised. Experiments B-C represent variations of the compositions used to demonstrate the invention.

## Table 1

| Material | Control Exp A | Parts Exp B | Exp C |
|---|---|---|---|
| Natural Rubber | 50 | 0 | 0 |
| Epoxidized Natural Rubber[1] | 0 | 50 | 65 |
| Halobutyl Rubber[2] | 50 | 50 | 35 |
| Carbon Black | 45 | 45 | 45 |
| Silica | 25 | 25 | 25 |
| Processing Oil (Napthenic) | 10 | 10 | 10 |
| Antidegradant (p-phenylene diamine type) | 2 | 2 | 2 |
| Zinc Oxide | 4 | 4 | 4 |
| Stearic Acid | 2 | 2 | 2 |
| Sulfur | 2 | 2 | 2 |
| Accelerator (sulfenamide type) | 1 | 1 | 1 |

1.  Obtained as 25% epoxidized natural rubber, (25% of double bonds epoxidized), obtained from MRPRA, or Malaysian Rubber Producers Research Association.

2.  Obtained as high viscosity, brominated isobutylene isoprene rubber from Polysar Ltd.

Various tests were conducted on the prepared, cured samples. The results are shown in Table 2, with Exp D (an additional Control) and Exp A-C relating to the samples of Exp A-C of Example I, with Exp A being a control in Example I for comparative purposes and Control Exp D is a formulated cured blend of natural rubber and styrene/butadiene copolymer rubber as a representative pneumatic tire toeguard compound which was not especially formulated for air retention emphasis for this example.

## Table 2

| Properties | (Control) Exp D | Exp A | Exp B | Exp C |
|---|---|---|---|---|
| Air Permeability (cc.mm/in$^2$ day.atm) | 970 | 340 | 150 | 180 |
| (cc.mm/cm$^2$ day.atm) | 6,258 | 2,194 | 968 | 1,162 |
| Tear[1] | 13 | 30 | 15 | 15 |
| Adhesion to Liner[2] | 69 | 60 | 61 | 60 |
| 200% Modulus (MPa) | 11 | 9.7 | 10.5 | 10 |
| Tensile (MPa) | 13.4 | 14 | 12.4 | 12 |
| Elongation @ Break (percent) | 240 | 450 | 230 | 270 |
| Rebound | 26 | 23 | 19 | 20 |

1. The tear value was determined by a peel tear test which measures the force in newtons to separate two similar cured sheets, pulling one sheet away from the other at a 180 degree angle. Such type of test is well known to those having skill in rubber compound test procedures.

2. The adhesion value was determined by peel tear test of the sample to a tire liner compound, represented in Newton units and is otherwise conducted in a manner similar to the aforesaid peel tear test for the aforesaid tear value test.

Air permeability tests were conducted by measuring the amount of air which permeates a thin rubber sample in a prescribed time under prescribed conditions as indicated above. Such type of test is understood to be well known to those having skill in such art.

Thus, these results demonstrate that use of epoxidized natural rubber improves the air impermeability over that of natural rubber and a more typical type of toeguard compound formulation.

A pneumatic rubber tire was prepared with its toeguard having an outer layer having the composition similar to Exp B and with textile woven fabric reinforcement.

While certain representative embodiments and details have been shown for the purpose of illustrating the invention, it will be apparent to those skilled in this art that various changes and modifications may be made therein within the scope of the claims.

## Claims

1. A pneumatic rubber tire with an integral toeguard component as a layer of a sulfur cured rubber composition positioned as an outer layer of the tire in its bead region characterized by being comprised of, based on 100 parts by weight rubber, a blend of (A) 20 to 60 parts by weight of at least one of butyl rubber and halobutyl rubber; and (B) 80 to 40 parts by weight of rubber comprised of (1) 10 to 100 weight percent epoxidized cis 1,4-polyisoprene rubber and, correspondingly, up to 90 weight percent cis 1,4-polyisoprene rubber, where said epoxidized rubber has a glass transition temperature (Tg) in the range of -10°C to -60°C.

2. The tire of claim 1 characterized in that said epoxidized natural rubber has a level of epoxidation in a range of 5 to 50 mole percent.

3. The tire of claim 2 characterized in that said toeguard component is fabric reinforced.

4. The tire of claim 3 characterized in that at least one of said epoxidized cis 1,4-polyisoprene rubber and said cis 1,4-polyisoprene rubber is natural rubber and said halobutyl rubber is selected from at least one of chlorobutyl and bromobutyl rubber.

5. The tire of claim 3 characterized in that said toeguard component is positioned to be located between the tire bead component and a rigid rim in a tire/rim assembly.

6. The tire of claim 3 characterized in that said toeguard component is sulfur co-cured with the rubber tire carcass.

7. The tire of claim 4 characterized in that said toeguard component is sulfur co-cured with the rubber tire carcass.

8. A pneumatic rubber tire is provided with an integral toeguard component as a layer of a sulfur cured rubber composition positioned as a textile woven fabric reinforced outer layer of the tire in its bead region characterized by being comprised of, based on 100 parts by weight rubber, a blend of (A) 20 to 60 parts by weight of at least one of butyl rubber and halobutyl rubber where said halobutyl rubber is selected from at least one of chlorobutyl rubber and bromobutyl rubber; and (B) 80 to 40 parts by weight of rubber comprised of (1) 50 to 100 weight percent epoxidized cis 1,4- polyisoprene rubber and, correspondingly, up to 50 weight percent cis 1,4-polyisoprene rubber, where said epoxidized rubber has a glass transition temperature (Tg) in the range of -10°C to -60°C and where said epoxidized rubber has a level of epoxidation in the range of 20 to 50 mole percent.

9. The tire of claim 8 characterized in that at least one of said epoxidized cis 1,4-polyisoprene and cis 1,4-polyisoprene is natural rubber.

10. The tire of claim 8 characterized in that said toeguard component is positioned to be located between the tire bead component and a rigid rim in a tire/rim assembly.

11. The tire of claim 8 characterized in that said toeguard component is sulfur cured with the rubber tire carcass.

## Patentansprüche

1. Luft-Gummireifen mit einer integralen Wulstschutz-Komponente als eine Schicht aus einer Schwefelvulkanisierten Kautschuk-Zusammensetzung, die als eine äußere Schicht des Reifens in seinem Wulstbereich positioniert ist, dadurch gekennzeichnet, daß sie, bezogen auf 100 Gewichtsteile Kautschuk, umfaßt eine Mischung von (A) 20 bis 60 Gewichtsteilen eines Butyl-Kautschuks und/oder Halogenbutyl-Kautschuks; und (B) 80 bis 40 Gewichtsteilen eines Kautschuks, der umfaßt (1) 10 bis 100 Gewichtsprozent epoxidierten cis-1,4-Polyisopren-Kautschuk und entsprechend bis zu 90 Gewichtsprozent cis-1,4-Polyisopren-Kautschuk, wobei der epoxidierte Kautschuk eine Glasübergangstemperatur (Tg) im Bereich von -10°C bis -60°C aufweist.

2. Reifen nach Anspruch 1, dadurch gekennzeichnet, daß der epoxidierte Naturkautschuk einen Epoxidationsgrad im Bereich von 5 bis 50 Molprozent aufweist.

3. Reifen nach Anspruch 2, dadurch gekennzeichnet, daß die Wulstschutz-Komponente gewebeverstärkt ist.

4. Reifen nach Anspruch 3, dadurch gekennzeichnet, daß der epoxidierte cis-1,4-Polyisopren-Kautschuk und/oder der cis-1,4-Polyisopren-Kautschuk Naturkautschuk sind und der Halogenbutyl-Kautschuk aus Chlorbutyl- und/oder Brombutyl-Kautschuk ausgewählt ist.

5. Reifen nach Anspruch 3, dadurch gekennzeichnet, daß die Wulstschutz-Komponente so positioniert ist, daß sie sich zwischen der Reifenwulst-Komponente und einer starren Felge in einem Reifen/Felgen-Aufbau befindet.

6. Reifen nach Anspruch 3, dadurch gekennzeichnet, daß die Wulstschutz-Komponente mit der Gummireifen-Karkasse Schwefel-covulkanisiert ist.

7. Reifen nach Anspruch 4, dadurch gekennzeichnet, daß die Wulstschutz-Komponente mit der Gummireifen-Karkasse Schwefel-covulkanisiert ist.

8. Luft-Gummireifen, der mit einer integralen Wulstschutz-Komponente als eine Schicht aus einer Schwefel-vulkanisierten Kautschuk-Zusammensetzung versehen ist, die sich als Textilgewebe-verstärkte äußere Schicht des Reifens in seinem Wulstbereich befindet, dadurch gekennzeichnet, daß sie, bezogen auf 100 Gewichtsteile Kautschuk, umfaßt eine Mischung von (A) 20 bis 60 Gewichtsteilen eines Butyl-Kautschuks und/oder Halogenbutyl-Kautschuks, wobei der Halogenbutyl-Kautschuk ausgewählt ist aus einem Chlorbutyl-Kautschuk und/oder Brombutyl-Kautschuk; und (B) 80 bis 40 Gewichtsteilen eines Kautschuks, der (1) 50 bis 100 Gewichtsprozent epoxidierten cis-1,4-Polyisopren-Kautschuk und entsprechend bis zu 50 Gewichtsprozent cis-1,4-Polyisopren-Kautschuk umfaßt, wobei der epoxidierte Kautschuk eine Glasübergangstemperatur (Tg) im Bereich von -10°C bis -60°C aufweist und wobei der epoxidierte Kautschuk einen Epoxidationsgrad im Bereich von 20 bis 50 Molprozent aufweist.

9. Reifen nach Anspruch 8, dadurch gekennzeichnet, daß das epoxidierte cis-1,4-Polyisopren und/oder das cis-1,4-Polyisopren Naturkautschuk sind.

10. Reifen nach Anspruch 8, dadurch gekennzeichnet, daß die Wulstschutz-Komponente so positioniert ist, daß sie sich zwischen der Reifenwulst-Komponente und einer starren Felge in einem Reifen/Felgen-Aufbau befindet.

11. Reifen nach Anspruch 8, dadurch gekennzeichnet, daß die Wulstschutz-Komponente mit der Gummireifen-Karkasse Schwefel-vulkanisiert ist.

## Revendications

1. Bandage pneumatique en caoutchouc muni d'un composant solidaire de protège-talon sous forme d'une couche d'une composition de caoutchouc vulcanisé au soufre positionnée dans sa région de talon à titre de couche externe du bandage pneumatique, caractérisé par le fait qu'il comprend, basé sur 100 parties en poids de caoutchouc, un mélange de (A) 20 à 60 parties en poids d'au moins un caoutchouc choisi parmi le caoutchouc butyle et le caoutchouc halogénobutyle, et (B) de 80 à 40 parties en poids de caoutchouc comprenant (1) de 10 à 100 pour cent en poids de caoutchouc cis-1,4-polyisoprène époxydé et, de manière correspondante, jusqu'à 90 pour cent en poids de caoutchouc cis-1,4-polyisoprène, dans lequel ledit caoutchouc époxydé possède une température de transition vitreuse (Tg) dans le domaine de -10°C à -60°C.

2. Bandage pneumatique selon la revendication 1, caractérisé en ce que ledit caoutchouc naturel époxydé a un taux d'époxydation dans le domaine de 5 à 50 moles pour cent.

3. Bandage pneumatique selon la revendication 2, caractérisé en ce que ledit composant de protège-talon est renforcé par du tissu.

4. Bandage pneumatique selon la revendication 3, caractérisé en ce qu'au moins un caoutchouc choisi parmi ledit caoutchouc cis-1,4-polyisoprène époxydé et ledit caoutchouc cis-1,4-polyisoprène est du caoutchouc naturel, et ledit caoutchouc halogénobutyle est au moins un caoutchouc choisi parmi le caoutchouc chlorobutyle et le caoutchouc bromobutyle.

5. Bandage pneumatique selon la revendication 3, caractérisé en ce que ledit composant de protège-talon est positionné pour être situé entre le composant de talon du bandage pneumatique et une jante rigide dans un assemblage bandage pneumatique/jante.

6. Bandage pneumatique selon la revendication 3, caractérisé en ce que ledit composant de protège-talon est covulcanisé au soufre avec la carcasse du bandage pneumatique en caoutchouc.

7. Bandage pneumatique selon la revendication 4, caractérisé en ce que ledit composant de protège-talon est covulcanisé au soufre avec la carcasse de bandage pneumatique en caoutchouc.

8. Un bandage pneumatique en caoutchouc est muni d'un composant solidaire de protège-talon sous forme d'une couche d'une composition de caoutchouc vulcanisé au soufre, positionnée dans sa région de talon sous forme d'une couche externe du bandage pneumatique renforcée par du tissu textile tissé, caractérisé par le fait qu'il comprend, basé sur 100 parties en poids de caoutchouc, un mélange de (A) 20 à 60 parties en poids d'au moins un caoutchouc choisi parmi le caoutchouc butyle et le caoutchouc halogénobutyle, dans lequel le caoutchouc halogénobutyle est au moins un caoutchouc choisi parmi le caoutchouc chlorobutyle et le caoutchouc bromobutyle, et (B) de 80 à 40 parties en poids de caoutchouc comprenant (1) de 50 à 100 pour cent en poids de caoutchouc cis-1,4-polyisoprène époxydé et, de manière correspondante, jusqu'à 50 pour cent en poids de caoutchouc cis-1,4-polyisoprène, dans lequel ledit caoutchouc époxydé possède une température de transition vitreuse (Tg) dans le domaine de -10°C à -60°C et dans lequel ledit caoutchouc époxydé possède un taux d'époxydation dans le domaine de 20 à 50 moles pour cent.

9. Bandage pneumatique selon la revendication 8, caractérisé en ce qu'au moins un caoutchouc choisi parmi ledit cis-1,4-polyisoprène époxydé et le cis-1,4-polyisoprène est du caoutchouc naturel.

10. Bandage pneumatique selon la revendication 8, caractérisé en ce que ledit composant de protège-talon est positionné pour être situé entre le composant de talon du bandage pneumatique et une jante rigide dans un assemblage bandage pneumatique/jante.

11. Bandage pneumatique selon la revendication 8, caractérisé en ce que ledit composant de protège-talon est vulcanisé au soufre avec la carcasse de bandage pneumatique en caoutchouc.